# EUROPÄISCHE PATENTANMELDUNG

(11) **EP 2 769 895 A1**
(43) Veröffentlichungstag der Anmeldung: **27.08.2014**
(21) Anmeldenummer: 14000153.8
(22) Anmeldetag: 16.01.2014
(51) Int. Cl.: B60W 30/14, B60W 30/12

(54) **Verfahren zum Betrieb eines kraftfahrzeugseitigen Fahrerassistenzsystems mit einer kombinierten Längs- und Querführungsfunktion**

(30) Priorität: 26.02.2013 DE 102013003187
(71) Anmelder: AUDI AG, 85045 Ingolstadt (DE)
(72) Erfinder: Mielich, Wolfgang, 85055 Ingolstadt (DE); Holzmann, Manfred, 91171 Greding (DE); Meier, Regina, 85055 Ingolstadt (DE)
(74) Vertreter: Thielmann, Frank

(57) **Zusammenfassung**

Verfahren zum Betrieb eines kraftfahrzeugseitigen Fahrerassistenzsystems mit einer kombinierten Längs- und Querführungsfunktion (LF, QF) des Kraftfahrzeugs (1), wobei ausgehend von dem kombinierten Betrieb der Längsund Querführungsfunktion (LF, QF) in Abhängigkeit des Vorliegens wenigstens einer ermittelten ersten Abschaltbedingung (AB1) ein Abschalten der Längsführungsfunktion (LF) erfolgt, wohingegen die Querführungsfunktion (QF) beibehalten wird.

## Beschreibung

Die Erfindung betrifft ein Verfahren zum Betrieb eines kraftfahrzeugseitigen Fahrerassistenzsystems mit einer kombinierten Längs- und Querführungsfunktion.

Derartige Fahrerassistenzsysteme dienen der kombinierten bzw. simultanen und insbesondere automatisierten Längs- und Querführung eines Kraftfahrzeugs. Das Kraftfahrzeug kann demnach mittels des Fahrerassistenzsystems sowohl in Längs- als auch Querrichtung in einer Fahrspur geführt werden, so dass der Fahrer bei typischen, im Fahrbetrieb des Kraftfahrzeugs auftretenden Fahraufgaben, wie insbesondere Lenk- und Beschleunigungsvorgängen, unterstützt werden kann.

Typischerweise sehen entsprechende Fahrerassistenzsysteme eine Kopplung bzw. Verknüpfung der Längs- und Querführungsfunktion vor. D. h. die Längsführungsfunktion ist nur kombiniert mit der Querführungsfunktion aktivier- und deaktivierbar bzw. ab- und zuschaltbar. Es ist hierbei in der Folge problematisch, dass der Fahrer bei einer Deaktivierung des Fahrerassistenzsystems sofort mit einer Vielzahl an die Längs- als auch Querführung des Kraftfahrzeugs betreffenden Fahraufgaben, d. h. insbesondere vorzunehmenden Lenk- und Beschleunigungsvorgängen, konfrontiert wird. Dies stellt für den Fahrer regelmäßig einen komplexen, beanspruchenden Vorgang dar.

Der Erfindung liegt damit das Problem zugrunde, ein demgegenüber verbessertes Verfahren zum Betrieb eines kraftfahrzeugseitigen Fahrerassistenzsystems mit einer kombinierten Längs- und Querführungsfunktion anzugeben.

Das Problem wird erfindungsgemäß durch ein Verfahren der eingangs genannten Art gelöst, welches sich dadurch auszeichnet, dass ausgehend von dem kombinierten Betrieb der Längs- und Querführungsfunktion in Abhängigkeit des Vorliegens wenigstens einer ermittelten ersten Abschaltbedingung ein Abschalten der Längsführungsfunktion erfolgt, wohingegen die Querführungsfunktion beibehalten wird.

Das erfindungsgemäße Prinzip schlägt eine Entkopplung der Längsführungsfunktion und Querführungsfunktion eines entsprechenden Fahrerassistenzsystems vor, so dass dieses zumindest zeitweise insbesondere auch nur mit einer die Querführung des Kraftfahrzeugs, insbesondere vollautomatisiert, übernehmenden Querführungsfunktion betrieben werden kann. Die die Längsführung des Kraftfahrzeugs übernehmende Längsführungsfunktion kann sonach zeitweise deaktiviert bzw. abgeschaltet werden. Hierzu ist es im Rahmen des erfindungsgemäßen Verfahrens vorgesehen, während der durch die Längsführungsfunktion und die Querführungsfunktion erfolgenden kombinierten Längs- und Querführung des Kraftfahrzeugs kontinuierlich oder zu bestimmten, insbesondere regelmäßigen, Zeitpunkten das Vorliegen wenigstens einer ersten Abschaltbedingung zu prüfen.

Prinzipiell werden demnach im kombinierten Längs- und Querführungsbetrieb des Fahrerassistenzsystems verschiedene, insbesondere mit dem Fahrbetrieb des Kraftfahrzeugs unmittelbar oder mittelbar in Zusammenhang stehende, Parameter ermittelt und dahingehend überprüft, ob sie die erste Abschaltbedingung erfüllen. Wird die erste Abschaltbedingung z. B. durch einen oder mehrere Parameter erfüllt, erfolgt ein Abschalten der Längsführungsfunktion, wohingegen die Querführungsfunktion (zunächst) beibehalten wird. Das erfindungsgemäße Verfahren erlaubt also in Abhängigkeit des Vorliegens der ersten Abschaltbedingung bedingt durch die Entkopplung der Betriebszustände der Längsführungsfunktion und der Querführungsfunktion des Fahrerassistenzsystems eine Reduktion des Funktionsumfangs des Fahrerassistenzsystems auf die Querführungsfunktion. Das Fahrerassistenzsystem kann im Rahmen des erfindungsgemäßen Verfahrens in Abhängigkeit des Vorliegens der ersten Abschaltbedingung demnach neben der kombinierten Längs- und Querführungsfunktion auch nur eine Querführungsfunktion übernehmen.

Der Fahrer wird derart entlastet, da er sich bedingt durch die alleinige Deaktivierung der Längsführungsfunktion zunächst auf nur eine Fahraufgabe, d. h. die eigenständige Übernahme der Längsführung des Kraftfahrzeugs konzentrieren kann.

Ferner ist es denkbar, dass der Fahrer neben der Längsführung auch die Querführung des Kraftfahrzeugs wieder übernimmt, der Betrieb des Fahrerassistenzsystems also vollständig deaktiviert wird. Mithin ist es in einer zweckmäßigen Weiterbildung der Erfindung vorgesehen, dass ausgehend von dem Betrieb des Fahrerassistenzsystems mit abgeschalteter Längsführungsfunktion in Abhängigkeit des Vorliegens einer ermittelten zweiten Abschaltbedingung zusätzlich ein Abschalten der Querführungsfunktion erfolgt. Entsprechend kann das Fahrerassistenzsystem in zwei Stufen komplett außer Betrieb genommen werden, wobei in der ersten Stufe in Abhängigkeit des Vorliegens der ersten Abschaltbedingung zunächst nur die Längsführungsfunktion abgeschaltet wird, und in einer folgenden zweiten Stufe in Abhängigkeit des Vorliegens der zweiten Abschaltbedingung eine zusätzliche Abschaltung der Querführungsfunktion erfolgt.

Grundsätzlich gilt, dass das Vorliegen der ersten Abschaltbedingung(en) zur Abschaltung der Längsführungsfunktion und das Vorliegen der zweiten Abschaltbedingung(en) zur zusätzlichen Abschaltung der Querführungsfunktion des Fahrerassistenzsystems führt.

Im Weiteren werden verschiedene erste Abschaltbedingungen genannt, wobei ausgehend von dem kombinierten Betrieb der Längs- und Querführungsfunktion deren einzelnes oder gruppenweises Vorliegen zu dem Abschalten bzw. zu der Deaktivierung der Längsführungsfunktion des Fahrerassistenzsystems führen kann.

Beispielsweise können als erste Abschaltbedingung Betriebsparameter des Kraftfahrzeugs verwendet werden. Als Betriebsparameter können beispielsweise aktuelle oder prognostizierte Fahrgeschwindigkeitswerte des Kraftfahrzeugs und/oder aktuelle oder prognostizierte Beschleunigungs- oder Verzögerungswerte des Kraftfahrzeugs und/oder aktuelle oder prognostizierte Motordrehzahlen verwendet werden. Denkbar ist es sonach z. B. die erste Abschaltbedingung als erfüllt und somit vorliegend anzusehen, wenn die Fahrgeschwindigkeit des Kraftfahrzeugs einen bestimmten Geschwindigkeitsbereich über- oder unterschreitet. Beispielsweise kann die erste Abschaltbedingung als vorliegend erachtet werden, wenn das Kraftfahrzeug einen bestimmten Grenzwert der Fahrgeschwindigkeit, z. B. eine Fahrgeschwindigkeit von 30 km/h, unterschreitet. Denkbar ist es auch, die erste Abschaltbedingung als vorliegend zu erachten, wenn die Motordrehzahl eine bestimmten Grenzwert, z. B. 1500 Umdrehungen pro Minute, unterschreitet.

Es ist ferner denkbar, dass als erste Abschaltbedingung wenigstens ein Betriebszustand des Fahrerassistenzsystems und/oder wenigstens eines weiteren kraftfahrzeugseitigen Fahrerassistenzsystems und/oder Fahrzeugsicherheitssystems verwendet wird. Zunächst kann eine erste Abschaltbedingung für das Abschalten der Längsführungsfunktion beispielsweise dann gegeben sein, wenn ein Betriebszustand des Fahrerassistenzsystems angibt, dass die Ausführung der Längsführungsfunktion, z. B. aufgrund eines Defekts des Fahrerassistenzsystems und/oder eines mit dem Fahrerassistenzsystem, insbesondere dessen Längsführungsfunktion, in einem Wirkzusammenhang stehenden Bauteils, wie z. B. Bremsen, Kupplungen, Motor, nicht oder nur eingeschränkt möglich ist. Ferner ist es auf Basis ermittelter Betriebszustände weiterer Fahrerassistenzsysteme, z. B. in Situationen, in denen ein sicherer Fahrbetrieb des Kraftfahrzeugs durch den Betrieb weiterer kraftfahrzeugseitiger Fahrerassistenzsysteme bzw. Fahrzeugsicherheitssysteme gewährleistet wird, möglich oder unter gegebenenfalls erforderlich, die Längsführungsfunktion abzuschalten, da der Fahrer mittels der weiteren aktiven Fahrerassistenzsysteme bzw. Fahrsicherheitssysteme bei der Längsführung unterstützt wird. Die erste Abschaltbedingung kann demnach dann z. B. erfüllt sein, wenn ein weiteres Fahrerassistenzsystem bzw. Fahrsicherheitssystem aktiviert ist. Als Fahrerassistenzsysteme bzw. Fahrsicherheitssysteme kommen in diesem Zusammenhang beispielsweise Antiblockiersysteme (ABS), die Fahrdynamik des Fahrwerks beeinflussende Fahrwerksstabilitätssysteme (elektronische Stabilitätskontrolle), ein Anfahren an einer Steigung unterstützende Fahrerassistenzsysteme, die Fahrgeschwindigkeit auf eine Geschwindigkeitsobergrenze begrenzende Fahrerassistenzsysteme, eine Notbremsung unterstützende oder durchführende Fahrerassistenzsysteme, Systeme zur Motorschleppmomentregelung etc. in Frage.

Es kann ferner zweckmäßig sein, als erste Abschaltbedingung eine oder mehrere Fahrrouteninformation(en) über die aktuell von dem Kraftfahrzeug befahrene und/oder die künftig von dem Kraftfahrzeug befahrene Fahrroute zu verwenden. Unter Fahrrouteninformationen sind sämtliche im Zusammenhang mit der von dem Kraftfahrzeug aktuell befahrenen oder künftig zu befahrenden Fahrroute bzw. Fahrstrecke stehende Angaben zu verstehen. Diese können beispielsweise den Verlauf der Fahrstrecke, d. h. z. B. Kurven, Steigungen, Gefälle, Geschwindigkeitsbegrenzungen, Umweltbedingungen, d. h. z. B. klimatische Bedingungen, wie Eis, Regen, Schnee oder vorausliegende Hindernisse, wie Unfälle oder Staus, betreffen. Entsprechende Fahrrouteninformationen können beispielsweise auf Basis von einer in einem Navigationssystem vorgegebenen Fahrroute ermittelt werden. Im Rahmen dieser Ausführungsform des erfindungsgemäßen Verfahrens ist es z. B. möglich, eine für einen vorausliegenden, definierten Fahrroutenabschnitt eine erste Abschaltbedingung als vorliegend zu erachten, wenn das Kraftfahrzeug eine Fahrroute mit einem einen bestimmten Grenzwert überschreitenden Gefälle, z. B. 18%, befährt.

In Weiterbildung der Erfindung kann es vorgesehen sein, dass als erste Abschaltbedingung eine eine bestimmte Handlung wenigstens eines Fahrzeuginsassen, insbesondere des Fahrers, beschreibende Handlungsinformation, insbesondere eine ein Öffnen einer Tür des Kraftfahrzeugs und/oder eine eine Einstellung eines Betätigungselements, insbesondere eines Wählhebels zur Auswahl einer Fahrstufe eines Automatikgetriebes, beschreibende Handlungsinformation, verwendet wird. Es ist daher möglich, die auf Basis des Vorliegens der ersten Abschaltbedingung durchzuführende Abschaltung der Längsführungsfunktion durch einen Fahrzeuginsassen, insbesondere den Fahrer, zu veranlassen. Dies kann beispielsweise durch eine, z. B. mittels geeigneter Sensoriken erfolgende Ermittlung bestimmter Handlungen des Fahrers realisiert werden. Beispielsweise kann eine über eine Türsensorik ermittelte Öffnung einer Fahrzeugtür oder eine über eine Betätigungssensorik ermittelte Betätigung eines Betätigungselements, wie z. B. des Wählhebels zur Auswahl einer Fahrstufe eines Automatikgetriebes, über die Handlungsinformation beschrieben werden und die die vorgenannten Handlungen des Fahrers beschreibende Handlungsinformation als erste Abschaltbedingung definiert werden. Beispielsweise kann ein Betätigen eines entsprechenden Wählhebels von einer Vorwärtsfahrstufe in eine Rückwärtsfahrstufe als erste Abschaltbedingung definiert werden, so dass die Längsführungsfunktion bei entsprechender Betätigung des Wählhebels abgeschaltet wird. Mithin ist es möglich, bestimmte Handlungen eines Fahrzeuginsassen, welche nicht unmittelbar auf ein Abschalten der Längsführungsfunktion des Fahrerassistenzsystems gerichtet sind, als erste Abschaltbedingung zu definieren.

Für die zweite Abschaltbedingung und die bei deren Vorliegen erfolgende zusätzliche Abschaltung der Querführungsfunktion des Fahrerassistenzsystems gelten grundsätzlich die bezüglich der ersten Abschaltbedingung gemachten Ausführungen analog. D. h., dass ausgehend von dem alleinigen Betrieb der Querführungsfunktion ein einzelnes oder gruppenweises Vorliegen von zweiten Abschaltbedingungen zu dem zusätzlichen Abschalten bzw. zu der Deaktivierung der Querführungsfunktion des Fahrerassistenzsystems führen kann.

Als zweite Abschaltbedingung kann beispielsweise der Ablauf einer bestimmten Zeitdauer nach Abschalten der Längsführungsfunktion, d. h. nach Vorliegen der ersten Abschaltbedingung, und/oder aktuelle Betriebsparameter des Kraftfahrzeugs, insbesondere Fahrgeschwindigkeit und/oder Beschleunigungs- oder Verzögerungswerte und/oder der Lenkradwinkel einer kraftfahrzeugseitigen Lenkvorrichtung verwendet werden. Demnach ist es also möglich, auch die Querführungsfunktion zum Beispiel 30 Sekunden nach Abschaltung der Längsführungsfunktion ebenso abzuschalten. Selbstverständlich kann die Zeitdauer auch kürzer oder länger ausfallen. Eine zweite Abschaltbedingung kann beispielsweise auch erfüllt sein, wenn das Kraftfahrzeug eine bestimmte Fahrgeschwindigkeit, z. B. 10 km/h, unterschreitet bzw. unter eine bestimmte Fahrgeschwindigkeit verzögert, d. h. negativ beschleunigt wird. Gleichermaßen kann eine zweite Abschaltbedingung erfüllt sein, wenn die Gierrate des Kraftfahrzeugs einen vorbestimmten Wert unterschreitet. Dies kann sich beispielsweise auch in einer bezogen auf eine Referenzposition, welche Referenzposition eine Geradeausfahrt beschreibt, geringen Abweichung des Lenkradwinkels einer kraftfahrzeugseitigen Lenkvorrichtung ausdrücken.

Grundsätzlich ist es möglich, die nach Abschaltung der Längsführungsfunktion weiterhin aktive Querführungsfunktion auch dadurch zu beenden, dass der Fahrer diese übersteuert, also z. B. ein aktiver Lenkeingriff des Fahrers vorgenommen wird.

Es ist vorteilhaft, wenn das Abschalten der Längsführungsfunktion und gegebenenfalls das zusätzliche Abschalten der Querführungsfunktion kontinuierlich verlaufend über eine bestimmte Zeitdauer erfolgt. Unter kontinuierlicher Abschaltung ist zu verstehen, dass diese nicht abrupt erfolgt. Durch das kontinuierliche und sonach rampenartige Abschalten der Längsführungsfunktion bzw. gegebenenfalls auch der Querführungsfunktion ist dies für den Fahrer komfortabler. Die Zeitdauer, über welche die kontinuierliche Abschaltung der Längsführungsfunktion bzw. gegebenenfalls auch der Querführungsfunktion erfolgt, kann beispielsweise fünf Sekunden sein.

Das Abschalten der Längsführungsfunktion bzw. gegebenenfalls auch der Querführungsfunktion kann dem Fahrer gegebenenfalls über entsprechende akustische und/oder visuelle und/oder haptische Signale bemerkbar gemacht werden. Beispielsweise ist es möglich, während der kontinuierlichen Abschaltung der Längsführungsfunktion eine entsprechende Anzeige auf einem kraftfahrzeugseitigen Anzeigeinrichtung auszugeben, deren Intensität parallel zu der Abschaltung veränderlich ist, also insbesondere abnimmt. In analoger Weise können akustische Signale, z. B. über Lautsprecher, und/oder haptische Signale, z. B. in Form von Vibrationen des Lenkrads, gegeben werden. Die während des Abschaltens und des Zuschaltens der Längsführungsfunktion gegebenen Signale können unterschiedlich sein.

Das erfindungsgemäße Verfahren nutzt grundsätzlich entsprechende kraftfahrzeugseitige Steuereinrichtungen sowie die, z. B. als Bussystem realisierten, Daten- bzw. Kommunikationsverbindungen innerhalb des Kraftfahrzeugs. Insbesondere werden von einer Steuereinrichtung des Fahrerassistenzsystems entsprechende für die Ermittlung der ersten bzw. zweiten Abschaltbedingung erforderliche Daten zugeführt und von dieser verarbeitet.

Die Erfindung betrifft ferner ein Kraftfahrzeug umfassend ein Fahrerassistenzsystem mit einer kombinierten Längs- und Querführungsfunktion. Das Kraftfahrzeug zeichnet sich dadurch aus, dass es eine Steuereinrichtung aufweist, welche zur Ermittlung einer ersten Abschaltbedingung und in Abhängigkeit des Vorliegens der ermittelten ersten Abschaltbedingung zur Abschaltung der Längsführungsfunktion des Fahrerassistenzsystems ausgebildet ist.

Die Steuereinrichtung ist zweckmäßig ferner zur Ermittlung einer zweiten Abschaltbedingung und nach Abschalten der Längsführungsfunktion des Fahrerassistenzsystems in Abhängigkeit des Vorliegens der zweiten Abschaltbedingung zusätzlich zur Abschaltung der Querführungsfunktion des Fahrerassistenzsystems ausgebildet.

Grundsätzlich gelten sämtliche Ausführungen zu dem erfindungsgemäßen Verfahren analog für das erfindungsgemäße Kraftfahrzeug.

Weitere Vorteile, Merkmale und Einzelheiten der Erfindung ergeben sich aus den im Folgenden beschriebenen Ausführungsbeispielen sowie anhand der Zeichnungen. Dabei zeigt:
- Fig. 1: eine Prinzipdarstellung eines erfindungsgemäßen Kraftfahrzeugs gemäß einer beispielhaften Ausführungsform der Erfindung; und
- Fig. 2: ein Blockdiagramm zur Veranschaulichung des erfindungsgemäßen Verfahrens gemäß einer beispielhaften Ausführungsform der Erfindung.

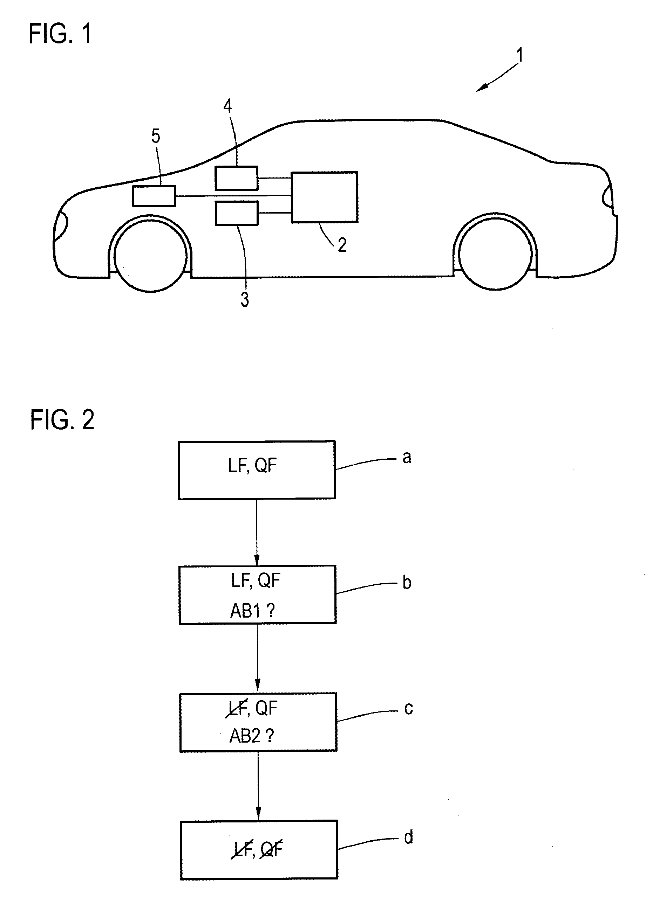

Fig. 1 zeigt eine Prinzipdarstellung eines erfindungsgemäßen Kraftfahrzeugs 1 gemäß einer beispielhaften Ausführungsform der Erfindung. Das Kraftfahrzeug 1 umfasst ein lediglich durch eine diesem zugehörige Steuereinrichtung 2 dargestelltes Fahrerassistenzsystem mit einer kombinierten Längsführungsfunktion LF und Querführungsfunktion QF. Ist das Fahrerassistenzsystem aktiv, unterstützt dieses den Fahrer sowohl bei der Längs- als auch der Querführung des Kraftfahrzeugs 1. Hierfür kommuniziert die Steuereinrichtung 2 mit bestimmten Komponenten des Antriebsstranges, wie z. B. einem Antriebsaggregat 3 bzw. Motor, einer mehrere Bremsen umfassenden Bremsvorrichtung 4 sowie einer Lenkvorrichtung 5 zur Lenkung der lenkbaren Vorderachse des Kraftfahrzeugs 1. Die Steuereinrichtung 2 kommuniziert dabei über einen Fahrzeugbus mit zu verschiedenen Bauteilen bzw. Komponenten des Kraftfahrzeugs 1 gehörigen Steuergeräten.

Fig. 2 zeigt ein Blockdiagramm zur Veranschaulichung des erfindungsgemäßen Verfahrens gemäß einer beispielhaften Ausführungsform der Erfindung. Das Verfahren richtet sich grundsätzlich auf den Betrieb eines Fahrerassistenzsystems mit einer kombinierten Längs- und Querführungsfunktion des Kraftfahrzeugs 1. Das Verfahren geht von einem aktiven Zustand des Fahrerassistenzsystems aus, d. h. sowohl die Längs- als auch die Querführungsfunktion ist angeschaltet bzw. aktiviert, so dass das Fahrerassistenzsystem sowohl die Längsführung LF als auch die Querführung QF des Kraftfahrzeugs 1 steuert (vgl. Kasten a).

Wie durch den Kasten b angedeutet, wird eine erste Abschaltbedingung AB1 ermittelt bzw. geprüft ob eine erste Abschaltbedingung AB1 vorliegt. Bei der ersten Abschaltbedingung AB1 kann es sich beispielsweise um einen aktuellen Betriebsparameter des Kraftfahrzeugs 1, wie z. B. eine aktuelle Motordrehzahl, handeln. Der Betriebsparameter wird von der Steuereinrichtung 2 über das oben beschriebene kraftfahrzeugseitige Bussystem, über welche die Steuereinrichtung 2 mit einem Motorsteuergerät kommuniziert, abgerufen.

Es ist gleichermaßen denkbar, vor der Ermittlung einer ersten Abschaltbedingung AB1 die aktuelle Fahrsituation des Kraftfahrzeugs 1 zu klassifizieren, um festzustellen, ob eine auf Basis des Vorliegens einer ersten Abschaltbedingung AB1 durchgeführte Abschaltung der Längsführungsfunktion LF des Fahrerassistenzsystems zeitlich vorgelagert zu einer Abschaltung der Querführungsfunktion QF erfolgen soll. Hierfür kann die Steuereinrichtung 2 beispielsweise die aktuelle Fahrgeschwindigkeit des Kraftfahrzeugs 1 oder einen Lenkradwinkel bzw. Lenkeinschlag, über welchen insbesondere Rückschlüsse darauf gezogen werden können, ob sich das Kraftfahrzeug 1 in einer Kurve befindet, eines mit der Lenkvorrichtung 5 verbundenen Lenkrads prüfen. Anhand der Klassifizierung der Fahrsituation wird also festgelegt, ob eine Abschaltung der Längsführungsfunktion LF des Fahrerassistenzsystems überhaupt durchgeführt werden soll.. Anhand der Klassifizierung kann gegebenenfalls ebenso festgelegt werden, dass bei Vorliegen der ersten Abschaltbedingung AB1 neben dem Abschalten der Längsführungsfunktion LF gleichzeitig auch ein Abschalten der Querführungsfunktion QF und somit ein komplettes Abschalten des Fahrerassistenzsystems erfolgt.

Im Rahmen des Verfahrens wird überprüft, ob eine vorher definierte, kontinuierlich ermittelte erste Abschaltbedingung AB1 z. B. von einem aktuellen Betriebsparameter des Kraftfahrzeugs 1, wie z. B. der Drehzahl des Antriebsaggregats 3, erfüllt wird. Es ist ferner denkbar, das Vorliegen der ersten Abschaltbedingung AB1 an weitere Parameter zu knüpfen. Hierzu zählen etwa Betriebszustände des Fahrerassistenzsystems und/oder weiterer kraftfahrzeugseitiger Fahrerassistenzsysteme, wie z. B. einer Motorschleppmomentregelung, und/oder kraftfahrzeugseitiger Fahrsicherheitssysteme, wie z. B. eines Anti-Blockier-Systems. Die erste Abschaltbedingung AB1 kann demnach vorliegen, wenn weitere Fahrerassistenzsysteme bzw. Fahrsicherheitssystem einzeln oder in Gruppen aktiviert sind.

Als eine erste Abschaltbedingung AB1 kann auch eine Fahrrouteninformation über die aktuell von dem Kraftfahrzeug 1 befahrene und/oder die künftig von dem Kraftfahrzeug 1 befahrene Fahrroute verwendet werden. In diesem Zusammenhang ist es möglich, z. B. vorausliegende Steigungen oder Gefälle der Fahrroute zu berücksichtigen und z. B. das Überschreiten einer bestimmten Neigung, z. B. 18%, der von dem Kraftfahrzeug 1 aktuell befahrenen oder künftig zu befahrenen Fahrroute als erste Abschaltbedingung AB1 zu definieren, aufgrund welcher die Längsführungsfunktion LF abgeschaltet wird. Die Fahrrouteninformation kann auch z. B. vorausliegende Hindernisse, wie Staus, Unfälle, etc. beschreiben. Entsprechende Fahrrouteninformationen können beispielsweise auf Basis von einer in einem kraftfahrzeugseitigen Navigationssystem vorgegebenen Fahrroute ermittelt werden.

Eine erste Abschaltbedingung AB1 kann z. B. auch dann vorliegen, wenn eine mittels einer Handlungsinformation beschriebene Betätigung eines Wählhebels für eine Fahrstufe eins Automatikgetriebes, z. B. ein Umschalten von einer Vorwärtsfahrstufe in eine Rückwärtsfahrstufe, gegeben ist. Eine Handlungsinformation kann beispielsweise auch ein über eine Türsensorik ermitteltes Öffnen einer Tür des Kraftfahrzeugs 1 beschreiben, was ebenso als erste Abschaltbedingung AB1 definiert werden kann.

Ist eine erste Abschaltbedingung AB1 gegeben, wird die Längsführungsfunktion LF des Fahrerassistenzsystems abgeschaltet. Die Abschaltung der Längsführungsfunktion LF erfolgt in Abhängigkeit der jeweiligen ersten Abschaltbedingung AB1 rampenartig über einen bestimmten Zeitraum, z. B. einen Zeitraum von 10 Sekunden, so dass der Fahrer leichter mit dem Abschalten der Längsführungsfunktion LF umgehen kann. Nach Abschaltung der Längsführungsfunktion LF unterstützt das Fahrerassistenzsystem den Fahrer nur noch bei der Querführung des Kraftfahrzeugs 1. Die Querführungsfunktion QF des Fahrerassistenzsystems bleibt unabhängig von der Längsführungsfunktion LF aktiv (vgl. Kasten c).

Nach Abschaltung der Längsführungsfunktion LF erfolgt eine Ermittlung einer zweiten Abschaltbedingung AB2 bzw. eine Überprüfung, ob eine zweite Abschaltbedingung AB2 vorliegt (vgl. Kasten c). Bei Vorliegen der zweiten Abschaltbedingung AB2 wird zusätzlich die noch aktive Querführungsfunktion QF des Fahrerassistenzsystems abgeschaltet. Die zweite Abschaltbedingung AB2 kann z. B. ein bestimmtes Zeitintervall nach Abschaltung der Längsführungsfunktion LF sein. Sonach kann die Querführungsfunktion QF z. B. nach Ablauf einer Zeitdauer von z. B.30 Sekunden nach Abschalten der Längsführungsfunktion LF erfolgen. Die Zeitdauer zur zusätzlichen Abschaltung der Querführungsfunktion QF nach Abschaltung der Längsführungsfunktion ist in der Regel werksseitig vorgegeben.

Denkbar ist es auch, das Vorliegen der zweiten Abschaltbedingung AB2 daran zu knüpfen, dass sich gewisse Betriebsparameter des Kraftfahrzeugs 1, wie z. B. die Fahrgeschwindigkeit, verändert haben. Eine zweite Abschaltbedingung kann demnach beispielsweise erfüllt sein, wenn das Kraftfahrzeug 1 eine bestimmte Fahrgeschwindigkeit, z. B. 10 km/h, unterschreitet bzw. unter eine bestimmte Fahrgeschwindigkeit verzögert, d. h. negativ beschleunigt wird.

Analog zu der aufgrund des Vorliegens der ersten Abschaltbedingung AB1 vorgenommenen Abschaltung der Längsführungsfunktion LF, erfolgt auch die bei Vorliegen der zweiten Abschaltbedingung AB2 vorgenommene Abschaltung der Querführungsfunktion QF kontinuierlich bzw. rampenartig über einen bestimmten Zeitraum, z. B. einen Zeitraum von drei Sekunden. Entsprechend wird die Übernahme der Querführung des Kraftfahrzeugs für den Fahrer komfortabler gestaltet.

Grundsätzlich ist es möglich, die nach Abschaltung der Längsführungsfunktion LF weiterhin aktive Querführungsfunktion QF auch dadurch zu beenden, dass der Fahrer diese durch einen aktiven Lenkeingriff übersteuert.

Insgesamt bietet das erfindungsgemäße Prinzip, eine Möglichkeit die einem Fahrerassistenzsystem mit einer kombinierten Längsführungsfunktion LF und Querführungsfunktion QF des Kraftfahrzeugs 1 mögliche Längs- und Querführung stufenweise abzuschalten. In einer ersten Stufe wird in Abhängigkeit des Vorliegens einer ersten Abschaltbedingung AB1 zunächst die Längsführungsfunktion LF abgeschaltet und in einer folgenden zweiten Stufe in Abhängigkeit des Vorliegens einer zweiten Abschaltbedingung AB2 zusätzlich die Querführungsfunktion QF abgeschaltet, was zu einer vollständigen Deaktivierung des Fahrerassistenzsystems führt (vgl. Kasten d).

## Patentansprüche

1. Verfahren zum Betrieb eines kraftfahrzeugseitigen Fahrerassistenzsystems mit einer kombinierten Längs- und Querführungsfunktion (LF, QF) des Kraftfahrzeugs (1),
**dadurch gekennzeichnet,**
**dass** ausgehend von dem kombinierten Betrieb der Längs- und Querführungsfunktion (LF, QF) in Abhängigkeit des Vorliegens wenigstens einer ermittelten ersten Abschaltbedingung (AB1) ein Abschalten der Längsführungsfunktion (LF) erfolgt, wohingegen die Querführungsfunktion (QF) beibehalten wird.

2. Verfahren nach Anspruch 1,
**dadurch gekennzeichnet, dass** ausgehend von dem Betrieb des Fahrerassistenzsystems mit abgeschalteter Längsführungsfunktion (LF) in Abhängigkeit des Vorliegens einer ermittelten zweiten Abschaltbedingung (AB2) zusätzlich ein Abschalten der Querführungsfunktion (QF) erfolgt.

3. Verfahren nach Anspruch 1 oder 2,
**dadurch gekennzeichnet,**
**dass** als erste Abschaltbedingung (AB1) Betriebsparameter des Kraftfahrzeugs (1), insbesondere Fahrgeschwindigkeitswerte und/oder Beschleunigungs- oder Verzögerungswerte und/oder Motordrehzahlwerte, verwendet werden.

4. Verfahren nach einem der vorangehenden Ansprüche,
**dadurch gekennzeichnet,**
**dass** als erste Abschaltbedingung (AB1) wenigstens ein Betriebszustand des und/oder wenigstens eines weiteren kraftfahrzeugseitigen Fahrerassistenzsystems und/oder Fahrsicherheitssystems verwendet wird.

5. Verfahren nach einem der vorangehenden Ansprüche,
**dadurch gekennzeichnet,**
**dass** als erste Abschaltbedingung (AB1) wenigstens eine Fahrrouteninformation über die aktuell von dem Kraftfahrzeug (1) befahrene und/oder die künftig von dem Kraftfahrzeug (1) befahrene Fahrroute verwendet wird.

6. Verfahren nach einem der vorangehenden Ansprüche,
**dadurch gekennzeichnet,**
**dass** als erste Abschaltbedingung (AB1) eine eine bestimmte Handlung wenigstens eines Fahrzeuginsassen, insbesondere des Fahrers, beschreibende Handlungsinformation, insbesondere eine ein Öffnen einer Tür des Kraftfahrzeugs (1) und/oder eine eine Einstellung eines Betätigungselements beschreibende Handlungsinformation, verwendet wird.

7. Verfahren nach einem der Ansprüche 2 bis 6,
**dadurch gekennzeichnet,**
**dass** als zweite Abschaltbedingung (AB2) der Ablauf einer bestimmten Zeitdauer nach Abschalten der Längsführungsfunktion (LF) und/oder aktuelle Betriebsparameter des Kraftfahrzeugs (1), insbesondere Fahrgeschwindigkeit und/oder Beschleunigungs- oder Verzögerungswerte und/oder die Gierrate und/oder der Lenkradwinkel einer kraftfahrzeugseitigen Lenkvorrichtung, verwendet wird.

8. Verfahren nach einem der vorangehenden Ansprüche,
**dadurch gekennzeichnet,**
**dass** das Abschalten der Längsführungsfunktion (LF) und gegebenenfalls das zusätzliche Abschalten der Querführungsfunktion (QF) kontinuierlich über eine bestimmte Zeitdauer verlaufend erfolgt.

9. Kraftfahrzeug umfassend ein Fahrerassistenzsystem mit einer kombinierten Längs- und Querführungsfunktion (LF, QF),
**gekennzeichnet durch**
eine Steuervorrichtung (2), welche zur Ermittlung einer ersten Abschaltbedingung (AB1) und in Abhängigkeit des Vorliegens der ermittelten ersten Abschaltbedingung (AB1) zur Abschaltung der Längsführungsfunktion (LF) des Fahrerassistenzsystems ausgebildet ist.

10. Kraftfahrzeug nach Anspruch 9,
**dadurch gekennzeichnet,**
**dass** die Steuereinrichtung (2) zur Ermittlung einer zweiten Abschaltbedingung (AB2) und nach Abschalten der Längsführungsfunktion (LF) des Fahrerassistenzsystems in Abhängigkeit des Vorliegens der zweiten Abschaltbedingung (AB2) zusätzlich zur Abschaltung der Querführungsfunktion (QF) des Fahrerassistenzsystems ausgebildet ist.
